# FASCICULE DE BREVET EUROPEEN

(11) **EP 0 704 156 B1**
(45) Date de publication et mention de la délivrance du brevet: **05.04.2000**
(21) Numéro de dépôt: 95402169.7
(22) Date de dépôt: 27.09.1995
(51) Int. Cl.: A01K 5/00, A01F 29/00

(54) **Appareil de distribution de paille ou d'aliments pour des animaux, notamment pour désileuse**
Gerät zum Ausgeben von Nahrungsmitteln oder Halmgut für Tiere, insbesondere von Silage
Machine for distributing food or straw for animals, especially for silage

(30) Priorité: 28.09.1994 FR 9411591
(43) Date de publication de la demande: 03.04.1996
(73) Titulaire: AGRAM, 93200 Saint Denis (FR)
(72) Inventeur: Lecomte, Stéphane, F-14350 Saint Martin des Besaces (FR)
(74) Mandataire: Cabinet HERRBURGER

(56) Documents cités:
- EP-A- 0 098 769
- EP-A- 0 121 751
- EP-A- 0 172 084
- EP-A- 0 494 812
- FR-A- 2 558 033
- GB-A- 765 365
- GB-A- 2 135 177

## Description

La présente invention concerne un appareil de distribution de paille ou d'aliments pour des animaux, notamment pour désileuse, du type défini dans le préambule de la revendication 1.

On connaît déjà de multiples modes de réalisation de telles désileuses. En général, ces appareils servent à prendre une ration de fourrage ou de produits alimentaires d'un silo pour les distribuer dans les auges d'animaux en étable. Un tel appareil sert également à distribuer de la paille, par projection, pour la litière des animaux.

On connaît par FR-A-2 558 033 une désileuse correspondant à la définition ci-dessus. Cette désileuse se compose d'une benne équipée d'un dispositif de chargement en forme de pelle agissant au niveau de l'extrémité arrière ouverte de la benne.

De l'autre côté de la benne il est prévu un carter équipé de deux rotors montés côte à côte dans le sens transversal de la benne. Ces deux rotors tournent dans le même sens et le carter comporte un couloir d'évacuation terminé par une ouverture située sur un côté de la benne.

Ce dispositif présente l'inconvénient de ne pouvoir distribuer les produits uniquement d'un côté. Bien que cette distribution d'un seul côté soit suffisante en principe, en pratique cela complique néanmoins l'utilisation de l'appareil puisqu'il faut toujours circuler devant les stalles dans le même sens, pour que le côté de distribution soit tourné du côté des stalles (mangeoires pour la distribution des aliments ou surface de repos pour la distribution de la paille). Un tel appareil ne permet pas de recycler les produits à l'intérieur de la benne pour les mélanger, comme cela est nécessaire. Enfin, certains produits fragiles risquent d'être abîmés puisque pris par l'un des rotors ils peuvent être repris par le second rotor, c'est-à-dire celui qui se trouve juste à la sortie.

Enfin, cet appareil présente des risques de bourrage du fait du regroupement des flux d'air chargés de matières au niveau du second rotor.

La présente invention a pour but de remédier à ces inconvénients et se propose de créer un appareil permettant de pailler ou de distribuer des produits alimentaires, dans toutes les directions d'une étable, sans avoir à effectuer de manoeuvre compliquées, en se limitant au simple travail d'orientation de la goulotte.

A cet effet, l'invention concerne un appareil de distribution correspondant à la définition donnée ci-dessus, caractérisé par les moyens définis dans la partie caractérisante de la revendication 1.

D'autres caractéristiques font l'objet des revendications dépendantes.

La présente invention sera décrite ci-après de manière plus détaillée à l'aide d'un exemple de réalisation non limitatif représenté schématiquement aux dessins annexés dans lesquels :
- la figure 1 est une vue de côté, très schématique, d'une désileuse selon l'invention,
- la figure 2 est une vue arrière de la désileuse au niveau des deux turbines,
- la figure 3 montre la structure interne de l'appareil servant à dévider et déchiqueter une balle de paille.

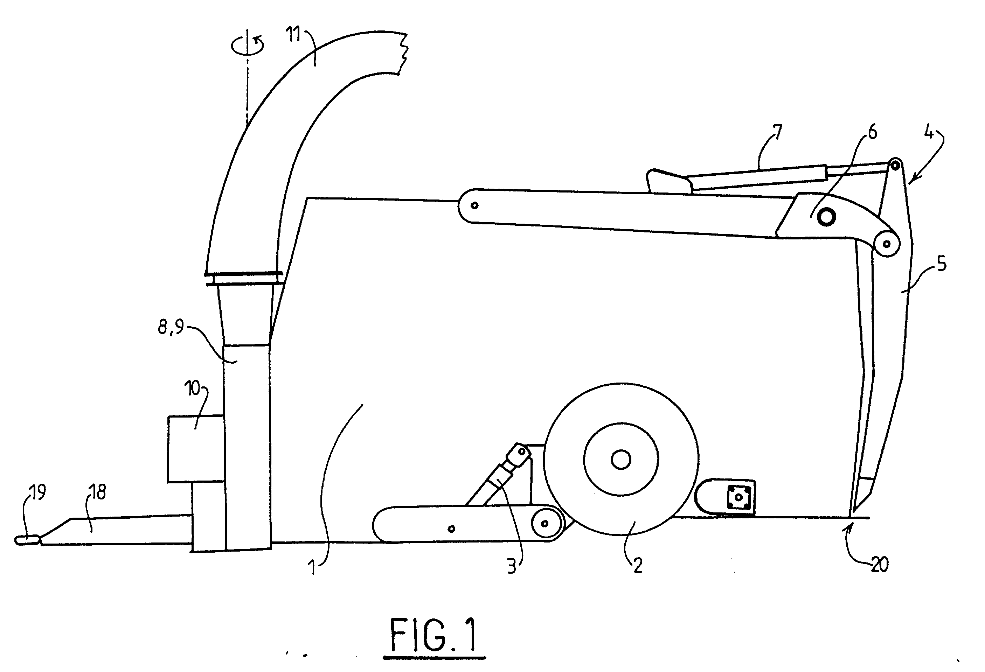

Selon la figure 1, l'invention concerne un appareil appelé usuellement désileuse, servant à prendre des produits ensilés pour les distribuer dans les auges d'une étable ou encore pour défaire une botte de paille ou usuellement un rouleau de paille et distribuer cette paille comme litière des animaux en étable.

Cet appareil usuellement tracté peut également dans certains cas, être relié à l'attelage en trois points d'un tracteur et être porté. Dans certains cas l'appareil peut également être automoteur.

La benne 1 est portée par un essieu ou, de préférence, par deux roues 2, relevables par un mécanisme à vérin 3, pour permettre d'abaisser la benne pour les opérations de chargement.

Dans le présent exemple, à l'arrière, la benne ouverte est équipée d'un dispositif de chargement 4 constitué par une pelle 5, articulée sur un bras 6 commandé par un ou plusieurs vérins 7.

Par le mouvement de descente et de basculement de la pelle 5 on racle le front de taille du silo pour remplir la benne 1.

Le fond de la benne est constitué par un tapis convoyeur non représenté à cette figure 1.

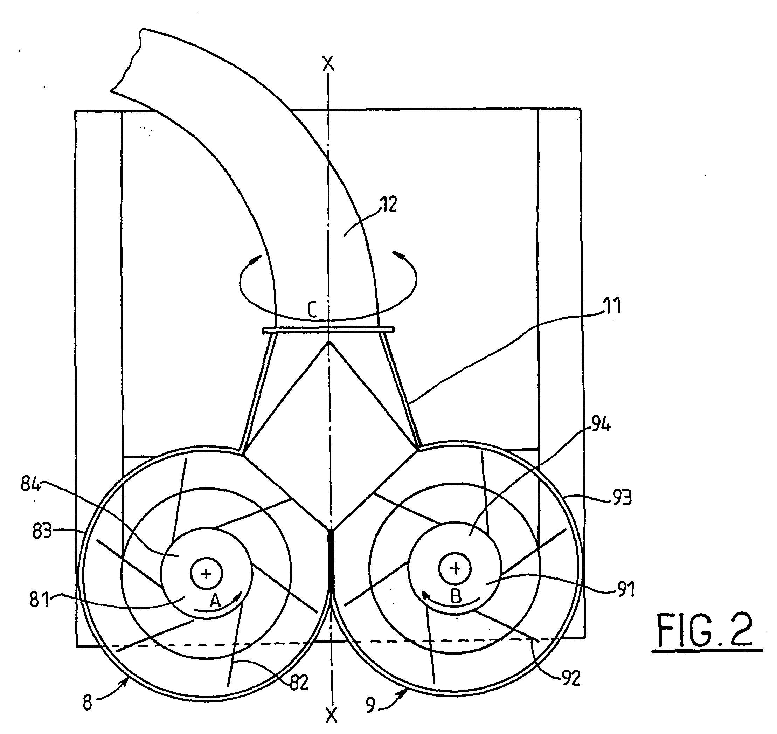

A l'autre extrémité, la benne 1 est équipée de deux turbines 8, 9 entraînées chacune par exemple par un moteur hydraulique 10 ou à partir d'un moteur hydraulique commun et d'une transmission, dans des sens de rotation opposés. Ces deux turbines 8, 9 comportent un rotor 81, 91 muni de pales 82, 92. Les turbines 8, 9, y compris leurs rotors 81, 91 et leurs pales 82, 92, sont disposées symétriquement par rapport à un plan de symétrie XX (figure 2). Le sens de rotation opposé des deux rotors est indiqué par les flèches A et B. Ce sens de rotation est choisi pour que les flux d'air chargés de paille ou de produits transférés par les rotors se rejoignent dans le plan de symétrie XX.

Les rotors 81, 91 sont logés dans des carters 83, 93 qui se rejoignent et se poursuivent par un collecteur 11 portant une goulotte 12 pivotante (double flèche C). Le jet d'air chargé de produits alimentaires ou de paille fournis par les deux turbines 8, 9 est simplement dirigé en sortie des deux turbines, dans le plan de symétrie XX pour quitter les rotors tangentiellement mais suivant un axe sensiblement vertical, commun aux deux turbines 8, 9.

Cette absence d'orientation du jet lui permet d'être dévié dans toutes les directions autour de cet axe vertical à l'aide de la goulotte 12 qui n'est représentée que très partiellement.

Cela permet en particulier de distribuer le jet de produits, d'un côté ou de l'autre, en hauteur, pour le paillage, ou d'un côté et de l'autre, vers le bas, dans l'auge lorsqu'il s'agit d'aliments ou encore dans la benne pour le recyclage des produits pour réaliser un mélange homogène.

La construction du système de distribution par double turbine et goulotte d'éjection permet une réalisation compacte et basse, laissant à l'utilisateur placé dans le tracteur, une bonne visibilité vers l'arrière.

Les deux turbines 8, 9 sont entraînées par deux moteurs 84, 94 commandés par le circuit hydraulique du tracteur ou par une transmission à partir de la prise de force du tracteur.

D'autres moyens d'entraînement sont envisageables.

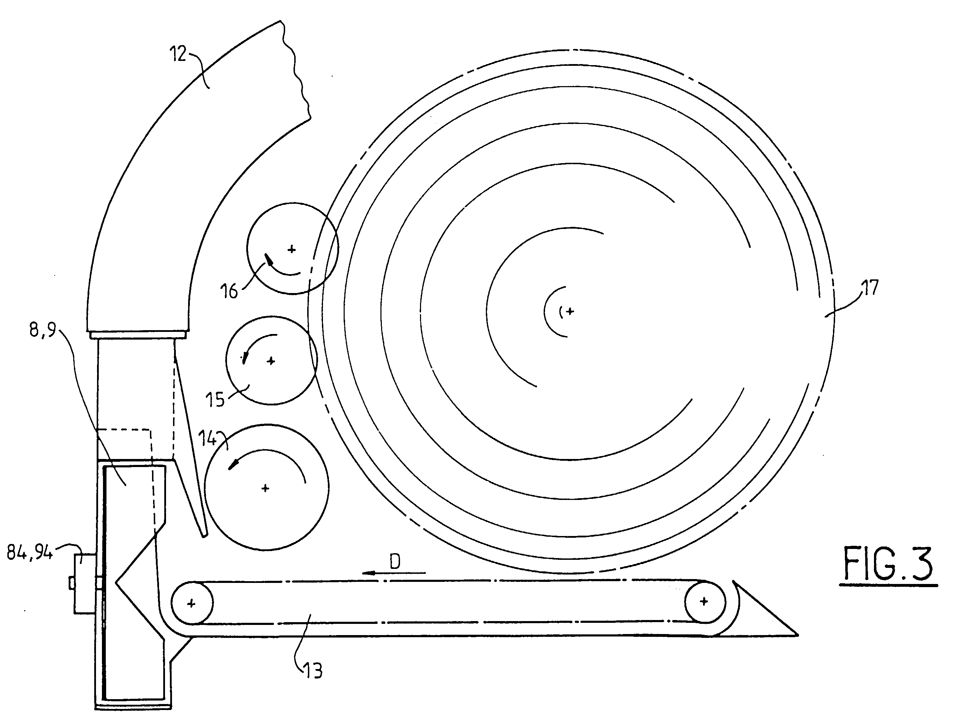

La figure 3 montre de manière plus détaillée la structure interne de la benne 1 et en particulier le tapis d'alimentation 13 et les démêleurs 14, 15, 16 qui mordent sur une balle de paille 17 pour la défaire. Les démêleurs 14, 15, 16 sont des organes connus ; il s'agit d'éléments à double vis hélicoïdale, chaque fois opposée par rapport au plan de symétrie, pour rogner la balle 17 de l'extérieur vers l'intérieur.

Les produits ainsi détachés tombent sur le tapis convoyeur 13 qui les conduit dans le sens de la flèche D vers les turbines 8, 9. Le mouvement du tapis convoyeur 13 (flèche D) assure non seulement l'entraînement des produits vers les turbines 8, 9 mais également une poussée sur la balle 17 pour l'appliquer contre les démêleurs 14, 15, 16.

Lorsque l'appareil est tracté, il s'attelle au tracteur non représenté par le timon 18 muni d'un oeillet d'attelage 19. Le tracteur commandant les manoeuvres déplace l'appareil par rapport au front de taille du silo ou pour la distribution des produits. Pendant le chargement avec la pelle 5, l'appareil est abaissé par relevage des roues 2 pour que l'extrémité 20 de la benne, en forme de règle, s'appuie sur le sol et facilite le chargement de la benne.

La benne peut également ne pas comporter de pelle à l'arrière, le chargement se faisant alors par le dessus. La pelle peut également être remplacée par une fraise.

L'invention a été décrite ci-dessus à titre d'exemple dans le cas de la distribution de paille comme litière. Toutefois, cette application n'est pas la seule et il est possible d'envisager la distribution de beaucoup d'autres produits de même type ou de même nature.

De façon similaire, l'invention n'est pas limitée à l'exemple très particulier décrit à l'aide des dessins. Ainsi, la commande des organes mobiles se fait en général mais non exclusivement à l'aide de vérins ; de même il n'est pas indispensable que la benne soit ouverte et comporte un dispositif de chargement ou que les turbines soient entraînées par un moteur hydraulique. Il en est de même de différents autres équipements décrits.

Enfin, les véhicules ne sont pas nécessairement tractés, ils peuvent également être automoteurs.

## Revendications

1. Appareil de distribution de paille ou d'aliments pour animaux, notamment pour désileuse, appareil comprenant :
- une benne (1) de réception des produits à distribuer,
- un dispositif éjecteur recevant les produits pour les distribuer est constitué par deux turbines jumelées (8, 9),
- les deux turbines sont logées symétriquement par rapport à un plan de symétrie (X-X) dans un carter commun (83, 93) débouchant dans un collecteur de sortie (11) recevant les flux d'air chargés de produits transférés par les rotors (81, 91)
appareil caractérisé en ce que :
- le dispositif éjecteur comporte une goulotte orientable (12) dans laquelle débouche le collecteur (11),
- les deux turbines jumelées (8, 9) sont entraînées en sens opposé et les flux d'air chargés de produits se rejoignent en un flux dirigé suivant un axe sensiblement vertical, d'une manière non orientée (XX).

2. Appareil selon la revendication 1, caractérisé en ce que la benne (1) est équipée de démêleurs (14, 15, 16) en amont des turbines (8, 9).

3. Appareil selon la revendication 1, caractérisé en ce que les turbines (8, 9) sont entraînées par un ou deux moteurs hydrauliques (84, 94) alimentés à partir du tracteur.

## Patentansprüche

1. Vorrichtung zur Verteilung von Stroh oder Futtermitteln, insbesondere bei der Siloentnahme, mit folgenden Merkmalen:
- Es ist ein Aufnahmebehälter (1) für die zu verteilenden Produkte vorgesehen;
- eine die Produkte zum Auswerfen aufnehmende Auswurfeinrichtung besteht aus einem Gebläsepaar (8,9),
- die beiden Gebläse sind in bezug auf eine Symmetrieebene (X-X) symmetrisch in einem gemeinsamen Gehäuse (83,93) angeordnet, welches in einen Auslaßsammler (11) übergeht, der die Luftströme aufnimmt, die mit den von den Rotoren (81,91) geförderten Produkten beladen sind,
**dadurch gekennzeichnet,**
- daß die Auswurfeinrichtung eine richtungsverstellbare Auswurftülle (12) umfaßt, in die der Sammler (11) mündet,
- daß die beiden im Paar angeordneten Gebläse (8,9) in entgegengesetztem Drehsinn angetrieben sind,
- und daß sich die beiden mit Produkten beladenen Luftströme in einen Luftstrom vereinigen, der in einer nicht orientierten Weise in einer im wesentlichen vertikalen Richtung verläuft.

2. Vorrichtung nach Anspruch 1, **dadurch gekennzeichnet,** daß der Behälter (1) stromaufwärts der Gebläse (8,9) mit Abtrageinrichtungen (14, 15, 16) versehen ist.

3. Vorrichtung nach Anspruch 1, **dadurch gekennzeichnet,** daß die Gebläse (8,9) durch einen oder zwei hydraulische Motoren (84,94) angetrieben sind, die vom Schlepper her beaufschlagt sind.

## Claims

1. A machine for spreading straw or fodder for animals, in particular for silage, this machine comprising:
- a bucket (1) for receiving the products to be distributed;
- an ejector device receiving the products in order to distribute them, comprising two impellers (8,9) arranged in a pair;
- the two impellers being housed symmetrically relative to a plane of symmetry (X-X) in a common housing (83,93) opening into an outlet collector (11) receiving the air flows carrying the products transferred by the rotors (81,91);
the machine being characterised in that:
- the ejector device has a chute (12) which can be oriented, into which the collector (11) opens;
- the two paired impellers (8,9) are driven in opposite directions and the air flows carrying the products merge into one flow directed along a substantially vertical axis in a non-oriented manner (XX) .

2. A machine as claimed in claim 1, characterised in that the bucket (1) is fitted with splitters (14,15,16) upstream of the impellers (8,9).

3. A machine as claimed in claim 1, characterised in that the impellers (8,9) are driven by one or two hydraulic motors (84,94) powered from the tractor.
